Europäisches Patentamt

**European Patent Office**

**Office européen des brevets**

(11) Publication number: **0 017 453**
A1

## EUROPEAN PATENT APPLICATION

(21) Application number: **80300993.5**

(22) Date of filing: **31.03.80**

(51) Int. Cl.³: **D 06 F 33/02**
**G 01 F 23/18, H 03 K 13/18**
**G 01 L 9/00**
**//H01H35/34**

(30) Priority: **02.04.79 US 25828**

(43) Date of publication of application:
**15.10.80 Bulletin 80/21**

(84) Designated Contracting States:
**DE FR GB IT**

(71) Applicant: **EATON CORPORATION**
**100 Erieview Plaza**
**Cleveland Ohio 44114(US)**

(72) Inventor: **Jones, William Haslet**
**258 South Oakland**
**Villa Park Illinois 60181(US)**

(74) Representative: **Hughes, Brian P. et al,**
**Graham Watt & Co. Riverhead**
**Sevenoaks, Kent TN13 2BN(GB)**

(54) **Washing appliance and liquid level sensing means therefor.**

(57) This invention relates to washing appliances for domestic use of the type having a tub for holding liquid into which the articles to be washed are immersed and means for filling and draining liquid to and from the tub. A novel sensor (50) is responsive to the hydrostatic head in the tub and provides a continuously varying signal indicating the liquid level in the tub as it varies during filling and draining. The sensor employs a housing (52) having an inlet (54) receiving fluid pressurized from the bottom of the tub and a pressure responsive member (68) coacting with a plunger (92) having attached thereto movable electrical contacts slidably engaging stationary contacts on the housing. The sensor includes circuit means responsive to contact movement providing discrete characteristics of the varying signal for predetermined increments of liquid level. In one embodiment the circuit means includes the movable contacts comprising wiper surfaces on a movable printed circuit board and in another embodiment the circuit means includes stationary contacts comprising strips on a stationary printed circuit board. Logic means are provided to render the liquid level signal in a digital form and actuate remote indicator means to display an optical readout of the liquid level on a console for the information of the machine user.

./...

Croydon Printing Company Ltd.

Fig. 1

Fig. 5

WASHING APPLIANCE AND LIQUID LEVEL SENSING MEANS THEREFOR

BACKGROUND OF THE INVENTION:

The present invention relates to appliances having a receptacle or tub containing liquid into which articles to be laundered are immersed and agitated and particularly to appliances of this type intended for domestic or household use. Laundry appliances of this type, or washing machines as they are commonly called, usually have power actuated valves adapted for connection to a source of washing liquid for contolling the filling and draining of the washing liquid from the receptacle. Power actuated agitator means are usually provided within the receptacle for effecting a washing action between the immersed articles and the washing liquid. Where desired, a power means is provided to spin the tub. A timer is usually employed to provide a programmed sequence of washing operations by alternately actuating the drain means and fill valves and the agitator.

The most widely used types of domestic washing machines also employ pressure switches for sensing the hydrostatic head in the receptacle for actuating the fill and drain valve when the liquid in the receptacle attains a predetermined level. The pressure switch functions provided in some types of washing machines presently known are performed by an individual pressure switch for each level of liquid at which it is desired to actuate or deactuate the fill and drain valves. This requires a plurality of pressure switches for high and low level control of the liquid in the receptacle during the programmed cycle of washing functions. In such type washers it has therefore, long been desired to find a way in which the pressure switch functions could be combined in a single sensor capable of activating the fill and drain valves at various predetermined levels of the liquid in the receptacle for controlling liquid level in the tub. Furthermore, it has long been desired to find an economical means of providing a continuous indication of the liquid level in the receptacle such that the sensor provided a control signal responsive to the varying liquid level and capable of command functions for associated control mechanisms.

Washing machine pressure switches have heretofore employed snap acting electrical contacts calibrated to actuate and deactuate upon movement of a pressure responsive member arranged to sense the pressure head of the liquid in the receptacle. Such pressure switch mechanisms have required a separate set of snap acting electrical contacts to be calibrated for actuation at each level of liquid for which a control function is to be commanded.

It has been thus heretofore prohibitively costly and difficult to arrange a plurality of electrical contacts for actuation in response to a single pressure responsive member, in order to provide control command signals at various receptacle liquid levels. In order to provide such a function, it has previously been necessary to provide a plurality of pressure switches each having a pressure responsive member and an accompanying set of snap-acting electrical contacts.

Alternatively, in another widely used type of machine, a single pressure switch has been employed and equipped with cam operated mechanisms to vary the actuation force on a single set of snap acting contacts. This type of arrangement requires precise calibration of the cam mechanism with respect to the position of the snap acting blade mechanism in the switch contacts. Consequently, it has been found probitively cumbersome and costly to provide pressure switch sensors activatable throughout the range of receptacle liquid level for providing command control signals. Therefore, it has been long sought to provide a simple and economical way to sense and indicate the varying level of liquid in the receptacle and simultaneously to provide a continuously varying command control signal indicative of the receptacle liquid level at predetermined increments throughout its range.

It is an object of the present invention to obviate or mitigate these difficulties.

The present invention is an appliance for washing articles of the type having a tub for receiving liquid therein for immersion of articles to be washed and means operable upon connection to a source of power for selectively agitating said articles with respect to said liquid and means selectively operable to introduce and drain liquid in the tub, said appliance being characterised by sensor means operable upon connection to a source of power to sense the hydrostatic pressure head of said liquid and emit a varying signal having certain characteristics thereof indicative of the varying level of liquid in said tub, and logic means responsive to said certain sensor signal characteristics and operative to activate said agitation means and said liquid introducing and said draining means in a preselected program.

The sensor employs a printed circuit board having strips provided on the surface thereof with each strip engaging a corresponding wiper electrical contact for providing a predetermined portion of the step-function signal. In one embodiment of the invention, the printed circuit board is attached to the diaphragm for movement in guides provided on the housing; and, in another embodiment the printed circuit board is stationary with corresponding wiper contacts attached to the diaphragm for wiping movement along the printed board strips.

The present invention thus provides a washing machine having a control system employing a sensor providing a varying signal indicative of incremental change in the level of washing liquid in the tub throughout the range of liquid level during the washing operation. The continuously varying signal is operative to provide command control functions throughout the entire range of liquid level in the tub. The novel control system employs a single sensor capable of providing the command control signal at predetermined increments of the liquid level throughout its fill range in the tub.

Embodiments of the present invention will now be described, by way of example, with reference to the accompanying drawings, in which:-

FIGURE 1 is a somewhat perspective view of a washing machine embodying the control system of the present invention;

FIGURE 2 is a side elevation view of the digital water level sensor employed in the system of the embodiment of Figure 1;

FIGURE 3 is a top view of the embodiment of Figure 2;

FIGURE 4 is a side elevation view taken in the direction of arrows 4-4 in Figure 2, with portions of the mounting bracket broken away to show the connector;

FIGURE 5 is a section view taken along the section indicating lines 5-5 of Figure 3 and shows the internal construction of the sensor of Figure 2;

FIGURE 6 is a section view taken along section indicating lines 6-6 of Figure 5 with the connector omitted to show the arrangement of the wiper contact on the printed circuit board strips and shows an alternate form of the diaphragm backing plate;

FIGURE 7 is a block diagram of the logic of the control system of the preferred form of the present invention;

FIGURE 8 is a schematic of the logic circuit for the preferred form of the control system of the present invention; and

FIGURE 9 is a cross-section similar to Figure 5 showing an alternate embodiment of the sensor employing stationary wipers and a printed circuit board movable with the pressure responsive diaphragm.

FIGURE 10 is a cross-section taken along section indicating line 10-10 of Figure 5 and shows the plunger guided in the tower block 84 and the mounting of the printed circuit board in grooves formed in the wall of the tower block cavity;

FIGURE 11 is a block diagram of the logic of an alternate control system for the embodiment of Figure 1;

FIGURE 12 is a schematic of the circuit for the optical display portion of the embodiment of Figure 11; and

FIGURE 13 illustrates the invention embodied in a front-loading type washing machine.

DETAILED DESCRIPTION:

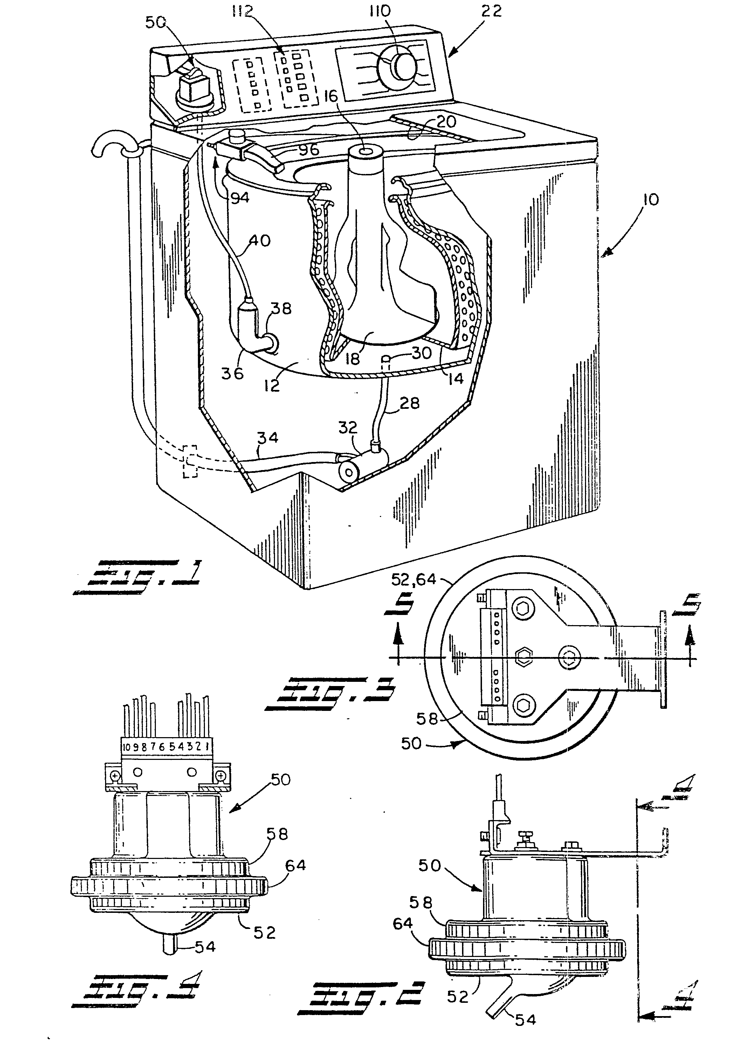

Referring now to Figure 1, a top loading washing machine indicated generally at 10 is shown with portions of the cabinet and interior parts broken away to illustrate the tub 12 or receptacle for holding the washing liquid. The tub 12 is broken away to expose the basket 14 which is disposed within the tub 12 and mounted for rotation with respect thereto about a vertical shaft 16 by a drive unit (not shown) usually located below the tub. The basket is broken away to show the agitator 18 which is received within the basket 14 and operatively connected to the drive unit, as for example through a transmission, for oscillation generally rotationally about shaft 16, as is well known in the art of top loading washing machines. The machine in Figure 1 has the cabinet illustrated in one of the well known forms in which a generally rectangular opening 20 is provided in the top surface or deck of the cabinet and the machine controls and function indicators are displayed on a console indicated generally at 22 which rises vertically from the top of the machine cabinet along the rear edge thereof. The access lid or door over the rectangular opening 20 in the top deck of the cabinet has been omitted in Figure 1 for clarity of illustration.

As is well known in the art, the machine 10 of Figure 1 is equipped with fill means indicated generally at 24, preferably in the form of a solenoid actuated valve adapted for connection to a source of pressurized water and discharging through a relatively low velocity nozzle 26 into the opening in the top of tub 12. Drain means are provided in the form of a flexible hose 28 which has one end connected to a drain port 30 provided in the bottom of tub 12 and the other end connected to a motor driven drain pump 32 provided in the machine cabinet below the tub 12, which pump discharges through a drain hose 34 attached to the pump outlet. The drain hose extends exteriorally of the machine cabinet for attachment to a convenient catch basin or sewer. As is known in the art, the end of the drain hose 34 is raised to a level above the top of tub 12 to prevent draining of the tub when the drain pump is not actuated.

An air trap 36 is provided, preferably in the form of a molded flexible elastomeric boot, having one open end thereof connected to a liquid sensor port 38 formed in the well of tub 12 spaced closely adjacent the bottom thereof. The upper end of boot 36 is closed and has connected thereto a sensing tube 40 which extends vertically upward through the machine cabinet into the region of the console 22.

The present invention includes a unique sensor, indicated generally at 50, mounted to the interior of the machine cabinet conveniently within the region encompassed by console 22, the sensor having the upper end of sensor tube 40 connected to the inlet thereof. The air trap 36 serves to provide a column of compressed air or air piston as the level of water in the tub 12 rises above the sensor port 38. The air trapped within the air trap 36 and sensor tube 40 and transmits air pressure equivalent to the hydrostatic head at the sensor port 38 to the upward end of the sensor tube 40 into the inlet of the sensor 50 in a manner well known in the art. Thus, the sensor need not be located at the same vertical level as the sensor port 38, in order to sense the pressure head of the liquid in the tub.

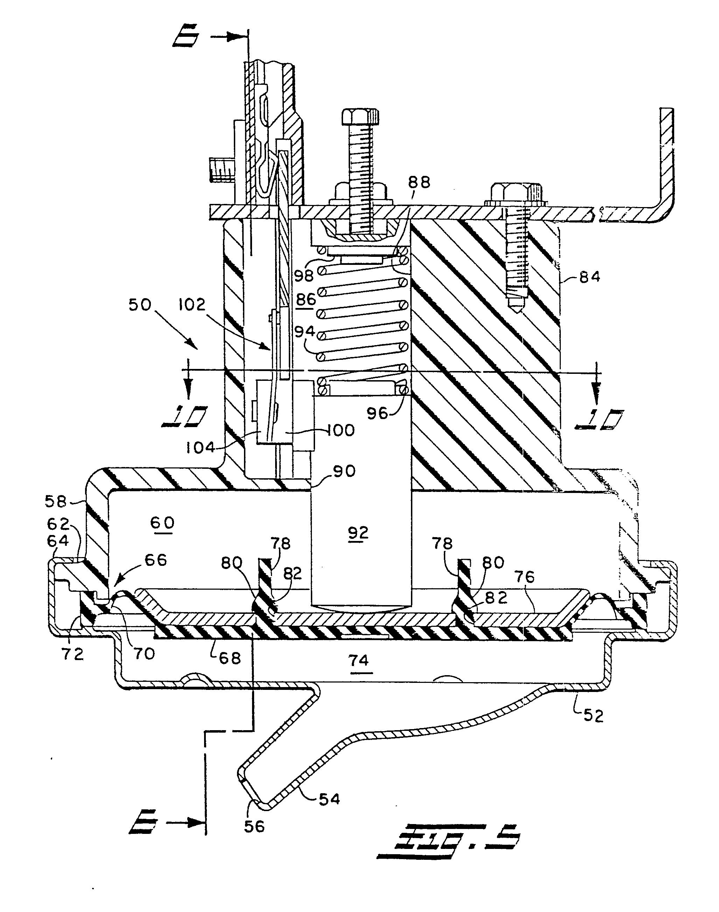

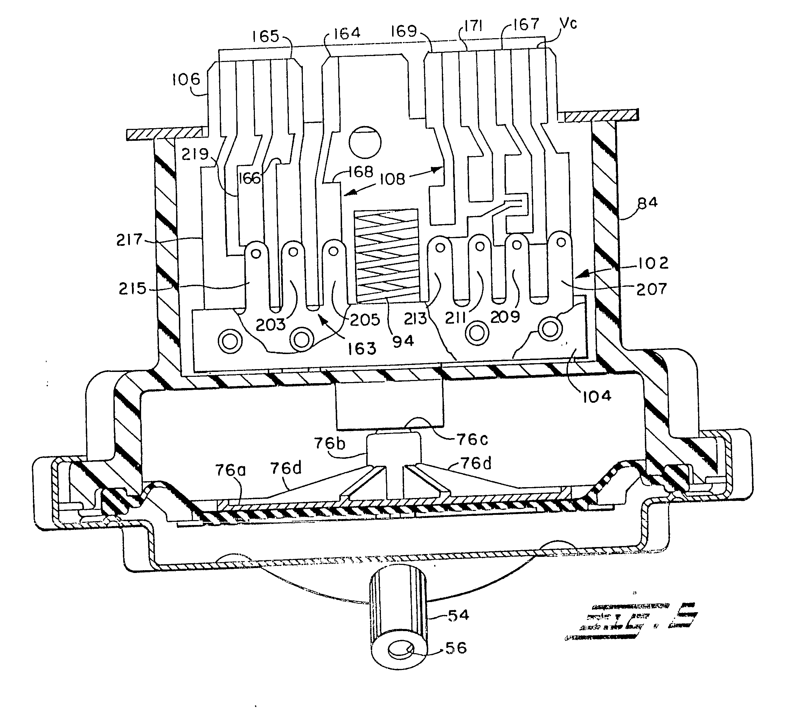

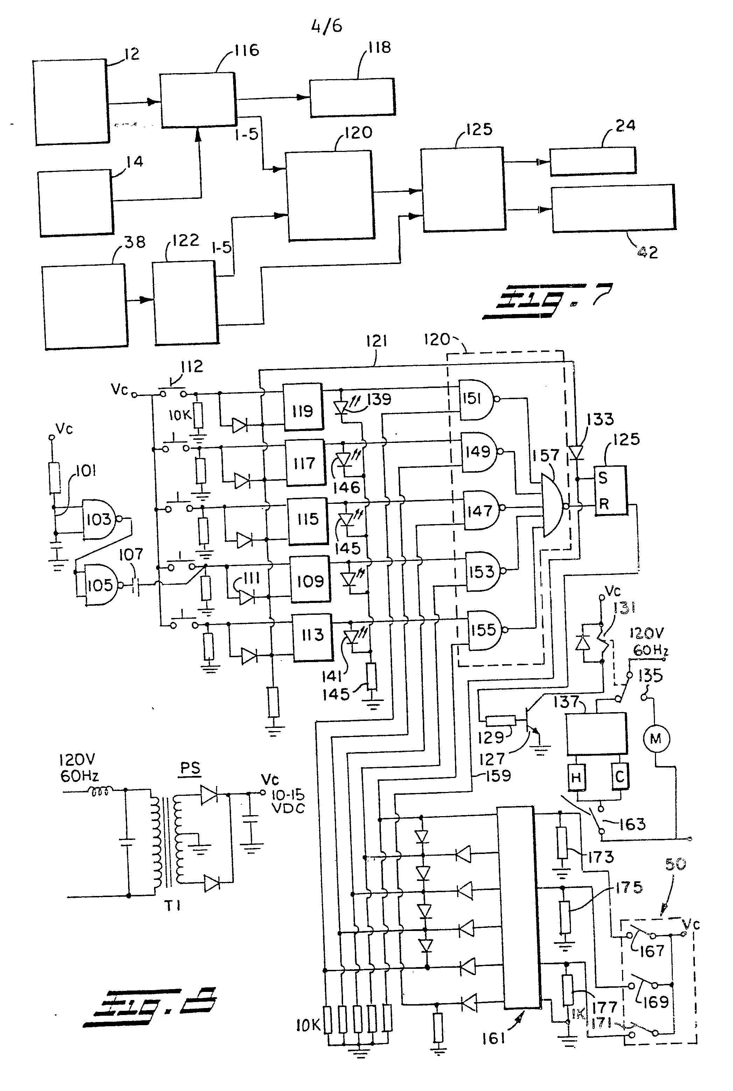

Referring now to Figures 2, 3, 4, 5 and 6, the sensor 50 is shown in detail as having a lower housing portion 52 with a generally circular cup-shaped configuration and with a tubular inlet nipple 54 having port 56 formed in the end thereof. The nipple 54 extends downwardly from the housing 52 at a convenient angle for attachment of sensor tube 40 thereto. In the presently preferred practice of the invention, housing portion 52 is formed of a suitable material as for example plastic or thin metal. The upper portion of the sensor housing 58 is formed integrally of plastic and defines a circular cavity 60 having a rim flange 62 extending radially outwardly therefrom over which is received the outer rim 64 of the lower housing portion, which rim is deformed radially inwardly over the rim flange 64 to retain the lower housing portion 52 onto the upper housing 58.

A flexible pressure responsive means 66 having a generally thin circular configuration and formed of preferably elastomeric material is provided and has a generally flat central portion surrounded by a relatively thinner annular convoluted flexible region 70 which is surrounded by an outer rim portion 72. The outer rim 72 of the diaphragm is received between the lower housing portion 52 and the lower face of flange 62 of the upper housing portion and is compressed therebetween to effect a fluid tight seal between the rim 72 of the diaphragm and the lower housing portion 52 and thus define a fluid pressure sensing chamber 74 between the lower surface of the diaphragm and the lower housing portion 52. Diaphragm 66 thus senses the fluid pressure applied to the nipplet inlet port 56 from the sensor tube 40.

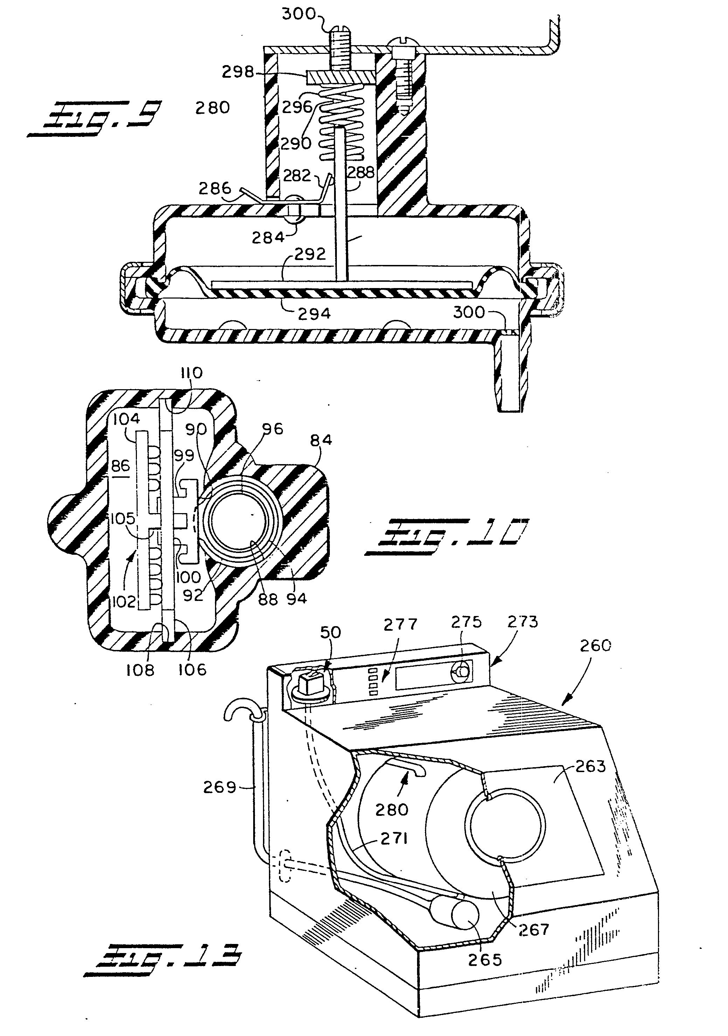

The diaphragm 66 has the central portion 68 thereof stiffened by a backing plate 76 having the outer rim thereof cupped in an upward direction with reference to Figure 5 to distribute the flexing of the thin portion 70 of the diaphragm. In the embodiment of Figure 5, the diaphragm preferably has pull tabs 78 molded integrally therewith which have bulbous portions 80 thereon such that the tabs may be pulled through apertures 82 provided in the backing plate and upon release of the tabs 80 the backing plate is retained against the diaphragm by the bulbs 82.

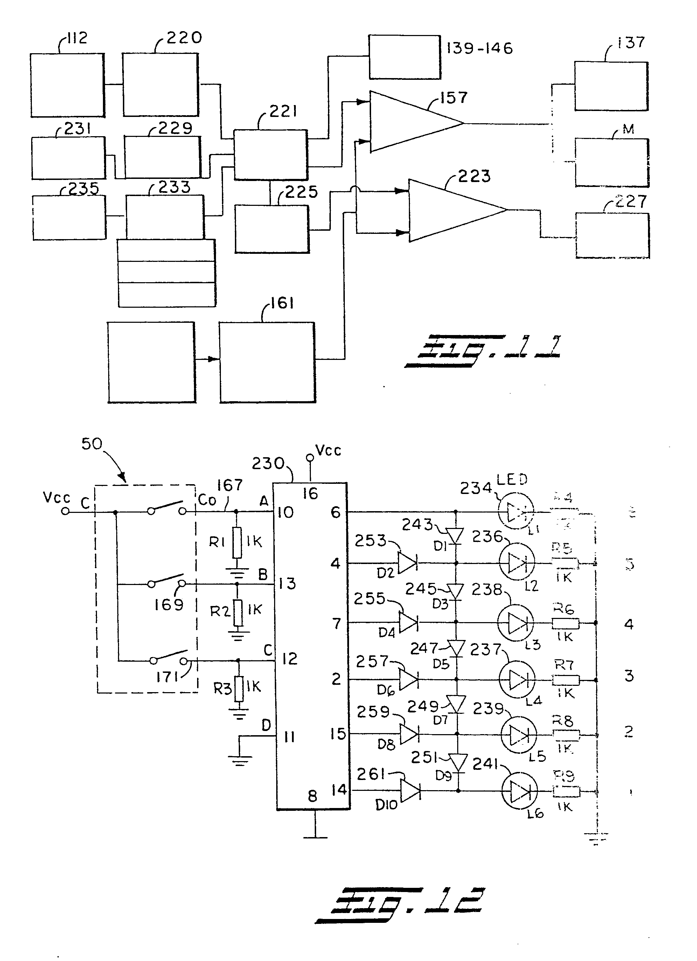

In the embodiment of Figure 6, in an alternate design, the backing plate 76a is shown as having an upstanding central post 76b with a curved upper surface 76c for contacting the movable plunger. The backing plate 76a also employs a plurality of radially extending stiffening ribs 76d extending outwardly from the post 76b.

Referring to Figures 5 and 10, the upper housing portion 58 has a tower block 84 extending vertically upward from the circular cavity 60, the tower block having an open-top cavity 86 formed therein with a guide surface 88 provided vertically along one portion of the wall thereof, the guide surface 88 having the lower portion thereof coinciding with the periphery of an aperture 90 formed in the bottom of cavity 86 and extending therethrough into the chamber 60 above the diaphragm. The guide aperture 90 has a plunger 92 slidably received therein. Referring particularly to Figure 10, the plunger 92 is shown as having a generally circular cross-section with the guide surface 88 having a partial cylindrical configuration to contact the circumference of the plunger and guide the plunger for vertical movement in the aperture 90. The plunger is biased toward the diaphragm plate 76 by a compression spring 94 which registers against the upper surface of the plunger 92 and is centered thereon by a shoulder 96 provided thereon with the upper end of the spring 94 registering against a centering stop 98 provided on the upper surface of the housing tower 84 and retained thereon adjustably in a manner described hereinafter in greater detail.

With continued reference to Figure 10, the guide surface 88 is shown in the preferred form as having a circumference subtending a central angle of approximately 270 degrees or three-quarters of a revolution of the circumference of the plunger 92. This construction retains the plunger in the guide and prevents binding of the plunger during sliding movement thereof in the aperture 90.

The plunger 92 has a pair of longitudinally extending spaced parallel fingers 99, 100 formed thereon for providing alignment of a wiper assembly upon attachment to the plunger 92 as will be hereinafter described.

Referring now to Figures 5, 6 and 10, an electrical wiper assembly 102 includes a mounting bar 104 and a plurality of contact arms attached thereto at generally right angles with a guide lug 105 formed thereon. Bar 104 is attached to the plunger 92 with lug 105 extending between the fingers 99, 100 formed on the plunger. The guide lug 105 serves to align the wiper contact assembly with the bar 104 horizontal and the contact arms vertical for vertical movement with the plunger.

A printed circuit board 106 is provided and has opposite edges thereof disposed in spaced parallel arrangement and received each in a groove 108, 110 formed in the inner-periphery of the wall of the tower block cavity 86. The printed circuit board has a plurality of electrically conducted strips indicated generally at 108 in Figure 6 with the strips disposed vertically in spaced parallel arrangement on the printed circuit board 106. The contact strips have cut-out portions spaced vertically therealong in the desired manner such that upon the contact strip having a wiper moved slidably in engagement therewith vertically along the strip, the wiper will enter the recess portion and terminate electrical contact with the respective strip at the appropriate desired vertical station therealong. The circuit details of the wiper contact and the contact strips will be described hereinafter in greater detail with respect to the program functions of the washing machine 10.

Referring now to Figs. 1 and 7, a selector dial/knob 110 is provided on the console 22 for activating the machine operation and selecting the programmed wash cycle. A plurality of water level selector push-buttons 112 are provided on the console in vertical array adjacent the selector knob 110. The operator activates the machine by rotating the selector dial to the chosen wash cycle program setting and then the dial knob is pulled out away from the console face to start the power up to the control circuit. In Fig. 7 the broad logic of the control system is illustrated wherein the signals from the water level selector buttons 112 and an automatic water level selector 114 are received by the memory 116, the output of which is provided to an optical display 118 and to one input of a comparator network 120. The output of the water level sensor 38 is in a binary digital form from the wipers engaging the strips on the printed circuit board and is converted by conversion network 122, the output of which is in decimal numbers which are applied to the second input of the comparator network 120. A latch 125 has the output of comparator network 120 applied to the set input thereof and the output of the converter network 122 applied to the reset input thereof. The latch has its outputs connected to activate the fill means 24 and also the agitator means 42 which is connected to the agitator 18 of Fig. 1. In operation, the logic of Fig. 7 provides that if one of the water level selector buttons has not been previously depressed, upon pulling the knob 110 the circuit will automatically select the maximum water level. The water selector buttons can be pushed while the machine is filling. However, it will be understood that the fill valve driver latch network 125 must be reset by an empty tub signal from the sensor decimal decoder 122 in order to prevent compound fill signals from multiple button actuations and over-filling of the tub.

Referring now to Fig. 8, a power supply indicated generally by the letters PS provides a DC voltage in the range of 10-15 volts labeled Vc having a voltage in the range of 10-15 volts DC. Any suitable arrangement may be used as for example, a double diode rectifier network connected to the outputs of the center tapped secondary of a line voltage step-down transformer T1. The supply voltage Vc is applied through a 330K ohm resistor to junction 101 which is in parallel with one input of a NAND gate 103 and through a .1 microfarad compacitor to ground. The output of NAND 103 is applied to both inputs of NAND 105, the output of which is applied through 0.2 microfarad compacitor 107 to the set input of flip flop 109 and also through diode 111 to the reset pin of flip flops 109, 113, 115, 117 and 119 and along lead 121 through diode 123 to the SET input of flip flop 125.

On initial power up the supply voltage Vc is applied to junction 101 and is delayed by the time required to charge the 0.1 microfarad compacitor connecting junction 101 to ground which causes the output of NAND 103 to go low causing input of NAND 105 to go low and the output thereof to go high to Vc which charges compacitor 107 giving a positive pulse to the SET input of flip flop 109. The positive pulse from NAND 105 is also applied through lead 21 to the SET input of flip flop 125 which has the output thereof applied through resistor 129 to the

0017453

- 12 -

base of transistor 127. A positive pulse on the SET input of flip flop 125 applies a zero voltage to resistor 129 which turns off transistor 127. When switch 127 is off the single pole double throw relay 131 is deenergized and current flows through contact 133 to the temperature selector switch 137 which is connected to the appropriate hot or cold fill valve. The logic of temperature selector switch 137 is known in the art and further description herein will be omitted for simplicity.

With continued reference to Fig. 8, when a pulse is received on the SET input of flip flop 109, the output 141 thereof goes high to Vc and current flows through light emitting diode 143 and resistor 145 to ground and gives a positive signal to one input of NAND 153 which gives a high (Vc) at the output thereof and typically for the outputs of all five NAND gates 147, 149, 151, 153 and 155, which outputs are applied to individual inputs of a five-input NAND 157 whose output remains low until one input goes low from toggling any one of the NANDs 151, 147, 149, 153 or 155. Each of the flip flops 109, 113, 115, 117, 119 has the set input thereof connected respectively to one of the water level selector buttons 112 (see Fig. 1) for setting the flip flops in response to depression of one of the water level selector buttons.

When the output of NAND 157 goes high, Vc is applied to the RESET input of latch 125 and the output thereof goes high (Vc) switching transistor switch 127 and activating relay 131 to open contact 133 thereby stopping the hot/cold fill valves and closing the contacts 135 causing current to flow to the drive motor M which is connected to agitator 18 (see Fig. 1).

If any of the water level push button switches 112 are pushed, the appropriate one of latches 119, 117, 115, 113, 109 are reset thus clearing any previous signal from NAND 105 and causes the appropriate flip flop to give a signal to the appropriate NAND 151 through 155 which is then toggled upon receiving a signal at the remaining inputs thereof from the sensor decimal decoder network as will be hereinafter explained in greater detail.

Line 159 applies a signal to the SET input of latch 125 from a decimal "0" output of the decoder indicated generally at 161. The sensor 38 upon closing of any of the switch contact SETS 167, 169 or 171 applies Vc to one input of decoder 161 which, in the presently preferred practiced invention is an RCA binary coded decimal to digital decoder integrated circuit No. CD4028 as obtained from RCA Corp., Solid State Division, Box 3299, Summerville, New Jersey, U.S.A., 08876. The decoder has a truth table as shown on page 138 of RCA Solid State Data Book SSD 203A for converting a binary coded decimal to a decimal output. The sensor contact SETS 167 is applied to input terminal 10 of decoder 161, sensor switch contact SET 169 is applied to input terminal 13 of the decoder and sensor switch contacts at 171 is applied to input terminal 12 of the decoder, input terminal 11 of the decoder being grounded. Each of the decoder input terminals 10, 13 and 12 is grounded respectively through a resistor 173, 175, 177 preferably having a value in the order of 1 K ohm.

Referring now to Fig. 6, the contact SETS of sensor 50 are shown as the terminal strips 169, 170 and 167 appearing on the right hand side of the printed circuit board 106.

The outputs of decoder 161 are selected in accordance with the truth table for "GRAY" code to prevent conflicting or false bit signals. In the presently preferred practiced invention, the truth table for the decoder is set forth below in table 1.

| DECIMAL | BIT 4 | BIT 2 | BIT 1 |
|---------|-------|-------|-------|
| 1 | 0 | 0 | 1 |
| 2 | 0 | 1 | 1 |
| 3 | 0 | 1 | 0 |
| 4 | 1 | 1 | 0 |
| 5 | 1 | 1 | 1 |

Referring to Fig. 8, the grounding resistors 173, 175, 177 lead off spurious charges which might be sensed by the high impedence CMOS solid state device employed. Similarly, bleed resistors are employed for grounding the signal from each of the selector buttoms 112 and preferably a value of 10 K ohms has been employed.

Likewise, bleed resistors of the order of 10 K ohms are employed to ground all remaining inputs to NANDS 147, 149, 151, 153 and 152. The flip-flops 109, 113, 115, 117 and 119 have internal means providing grounding of inputs.

Diode logic is employed for the output of gray code decoder 161 as will be hereinafter explained. When the water level in the machine tub is at a set level and it is desired to raise the water to a higher level, the machine operator merely depresses the push button 112 for the next higher desired level which causes latch 125 to be reset deenergizing the relay 133.

If a level selector button is pushed for a lower water level, diodes 191 through 197 apply Vc to NAND gates 151 through 155 for all lower water level values. Therefore, selecting a lower level causes toggling of the RESET of latch 125 by holding a continuous signal on the RESET input thereof. Diodes 179 through 189 are employed in series with the outputs of decoder 161 which comprise pins representing decimal 5, pin 7 representing decimal 4, pin 2 representing decimal 3, pin 15 representing decimal 2, pin 14 representing decimal 1 and pin 3 representing decimal 0.

Referring now to Figs. 8 and 6, the anti-flood switch 163 comprises contact strips 164 and 165 and wipers 203 and 205 of the slider assembly. Switch 163 opens when wiper 205 goes above edge 168 of strip 164 and deactivates the fill valves.

Wiper contacts 207, 209, 211 and 213 are electically in common and make contact respectively with wiper strips Vc 167, 171 and 169 in Fig. 6. The contact strips on the printed circuit board are provided with discontinuities or breaks in an appropriate manner to give the logic signals in accordance with Table 1 above. This arrangement has been found particularly satisfactory in the presently preferred practiced invention; however, it will be understood that other logic schemes may be employed for encoding/decoding the binary output of the strips Vc, 167, 171, 169. In the present preferred practiced invention the LEDS, such as LED 143 receiving the output of flip flop 109 and the corresponding LEDS receiving the outputs of flip flops 113, 115, 117 and 119 were chosen as National Semiconductor Part No. NSL 5053 and all diodes employed in the network of Fig. 8 were type 1N4001. All two-input NAND gates are type CD 4011 and a type CD4068 octal eight-input NAND has been found satisfactory for the comparator 157 although only five inputs are utilized in the presently described embodiment. A type CD 4027 integrated circuit has been found satisfactory for each of the flip flops 109, 113, 115, 117, 119.

Referring now to Fig. 11, block diagram is shown for the basic logic of an alternate embodiment of the control system for incorporating an accessory function activated by the sensor output signal at a desired water level. In the embodiment of Fig. 11 a RAM 221 stores a signal for the chosen water level from the water level selector 220 in a register, the output of which RAM is applied to the LEDS 139 through 146 and also to one input of the comparator 157, the output of which is applied to the fill valve 137 and also to the agitator motor M. The decimal decoder 161 has its output applied also to the input of comparator 157 as in the embodiment of Fig. 8, and also to one input of a second comparator 223 which has a separate input thereof receiving an input from a ROM 225 with the output of comparator 223 activating an auxiliary device as for example, bleach dispenser 227.

The RAM 221 receives separate input signals from the temperature selector 229 which is activated by a series of touch switches 231, and a cycle selector 233, which is activated by a separate set of touch switches 235, provided on the console. RAM 221 also has an output connected to a separate input of ROM 225 for calling out of memory the selected program function. In the presently preferred practice the RAM and ROM is a microprocessor manufactured by Intel Corp., Santa Clara, California, and Coded 8021. It will be apparent that in the embodiment of Fig. 7 and 11 that touch switches have been substituted for the function of the water level selector in place of the push buttons described in the embodiment of Fig. 1. The embodiment of Fig. 11 substitutes touch switches 231 and 235 for the cycle selector knob 110 of the embodiment of Fig. 1.

Referring now to Fig. 12, an alternate embodiment of the visual optical display is shown for indicating in an array of linearly disposed light emitting diodes (LEDS) the state of the water level. LEDS 234, 236, 238, 237, 239 and 241 are each respectively lit individually by decimal outputs from the decimal decoder 230 which in the presently preferred practice is commercially available CD 4028 integrated circuit having the diodes respectively connected to output terminals 6, 4, 7, 2, 15 and 14 as indicated in Fig. 12. The highest water level being indicated by the signal from terminal 6, the next lower level from a signal from pin 4, the next lower level by a signal from pin 7, the next lower level by a signal from pin 2, the next lower level by a signal from pin 15 and the lowest level by a signal from pin 14. The truth table for the output of decoder 230 is similar to that for decoder 161 of the embodiment of Fig. 8. Diodes 243 through 251 are each arranged to conduct current to the next lower level LED upon the water reaching any given level so as to give a vertical incremental visual array representing water level at any instance. Diodes 253, 255, 257, 259 and 261 are blocking diodes used to protect the decoder 230 and are each individually forward biased by the signal output from the respective terminals of the decoder 230. Decoder 230 has pin input terminal 10 thereof receiving the output of printed circuit board terminal strip switch 167 (see Fig. 6) with input terminal 13 connected to receive the output of terminal strip switch 169 and input terminal 12 connected to receive the output of printed circuit board terminal switch 171 and with input terminal 11 grounded directly. As in the embodiment of Fig. 8, 1 K ohm bleeder resistors from each input of decoder 230 to ground to protect against spurious signals, and similarly to a 1 Kohm bleeder resistor is connected between each of the LEDS 234 through 241 and ground.

Referring now to Fig. 13, the control system of the present invention is shown embodied in a washing machine of the type having a front loading cabinet. In this type machine the washing tub is disposed to rotate about a horizontal axis with access through a front opening door 263. A drain pump 265 is connected to a drain port in the bottom of the tub 267 and the pump discharges through a drain hose 269 similar to the embodiment of Fig. 1. A sensor tube 271 connectes the inlet of the drain pump to the digital sensor 50 mounted on the control console indicated generally at 273 and extending vertically upward from the rear of the top deck of the machine cabinet. The control console has a valve selector knob 275 and a vertical array of water level push buttons 277 which are similar to the selector knob and push buttons of the embodiment of Fig. 1. The water level sensor 50 which is identical to that of the embodiment of Fig. 1, is also located in the console of the machine of Fig. 13 and has the inlet 54 thereof connected to the sensor tube 271. Tub 267 of the embodiment of Fig. 13 is connected to a source of pressurized water by means of a filler tube 280 connected through a port near the top of tub 267 as illustrated in Fig. 13. The water level control and the function of the sensor 50 and control logic and circuitry of Figs. 7, 8, 11 and 12 may be employed in the machine 260 of Fig. 13 in the same manner as otherwise embodied in the machine of Fig. 1. However, in machines of the general type, e.g., front or side loading of Fig. 13, it has been found necessary to provide an inlet restriction orifice in sensor inlet 54. Referring to Fig. 9, such restrictor 300 is shown and preferably has an orifice diameter .020 inch (0.5mm) for dampening pulsations in water level head due to the tumbling action of the horizontally rotating drum.

The present invention thus provides the unique system for controlling the water level in the tub of a washing machine and embodies a unique water level sensor and control logic circuitry for providing a direct electrical binary signal from the pressure responsive means in the water level sensor and providing a visual indication of the water level signal on the machine console. The sensor embodied in the present invention provides a continuously incremental signal throughout the range of water level variation and functions to activate various desired machine control functions at any desired increment of water level. The unique display system of the present invention provides an optical indication of water level by a vertically arranged linear array of lights incrementally illuminated to indicate the relative position of the water level between empty and full tub.

Referring now to Fig. 9, an alternate embodiment 280 of the digital sensor is shown wherein a plurality of wiper contacts 282 are secured by fastening means such as a rivit 284, to the housing with connecting terminals 286 extending therefrom for external attachment thereto. The printed circuit board 288 having the contact strips thereon arranged in a manner similar to that of the printed circuit board 106 of the embodiment of Fig. 6 has the opposite vertically disposed edges thereof slidably received in a pair of grooves, one of which is indicated by the reference 290 in Fig. 9 and which grooves are similar to the grooves 108 and 110 illustrated in Fig. 10. The lower portion of the printed circuit board 288 is shown as attached to the backing plate 292 for the pressure resposive diaphragm 294. In operation, the printed circuit board of the embodiment of Fig. 9 moves in a vertical direction guided by the grooves 290 to move the contact strips of the printed circuit board along the wipers 282 to provide the binary output signals as a function of pressure on the diaphragm. A bias spring 296 urges the printed circuit board in a downward direction against the upward force from the printed circuit board exerted by diaphragm 294. The upper end of the spring 296 rests against a stop 298 through which a calibration screw 300 is provided for adjusting preload of the spring on the printed circuit board for calibrating the binary switching functions at the minimum water level pressure for the tub. The function of the embodiment of Fig. 9 is otherwise similar to that of the embodiment of Fig. 6.

CLAIMS:

1. An appliance for washing articles of the type having a tub for receiving liquid therein for immersion of articles to be washed and means operable upon connection to a source of power for selectively agitating said articles with respect to said liquid and means selectively operable to introduce and drain liquid in the tub, said appliance being characterised by sensor means (50) operable upon connection to a source of power to sense the hydrostatic pressure head of said liquid and emit a varying signal having certain characteristics thereof indicative of the varying level of liquid in said tub, and logic means (116, 122, 120, 125) responsive to said certain sensor signal characteristics and operative to activate said agitation means and said liquid introducing and said draining means in a preselected program.

2. An appliance for washing articles of the type having a receptacle for holding liquid into which the articles to be washed are immersed and performing a preselected program of washing operations on said articles, said appliance comprising inlet means adapted for connection to a source of washing liquid and fluidly communicating with said receptacle, outlet means fluidly communicating with said receptacle for effecting discharge flow of said washing liquid from said receptacle, means selectively actuable and operable upon connection to a source of power to effect a scrubbing action between said articles and said washing liquid, fill valve means selectively actuable and operable to block and unblock flow in said inlet means, and drain means selectively actuable and operable to block and unblock flow in said outlet means, and characterised by sensor means (50) operable to sense the hydrostatic pressure head of said liquid in said receptacle and to emit a varying signal having certain characteristics thereof indicative of the varying level of liquid in said receptacle, and logic means (116, 122, 120, 125) operable in response to predetermined values of said certain characteristics of said sensor signal for effecting a preselected program of actuation of said fill valve means, and said drain means for controlling the liquid level in said receptacle.

3. An appliance as claimed in claim 2, further comprising means selectively operable to dispense an additive to said washing liquid in said receptacle, and characterised in that said dispensing means (227) is activated by said logic means in response to a predetermined value of said certain characteristics of said sensor signal.

4. An appliance as claimed in claim 2 or claim 3, characterised in that said sensor means (50) comprises housing means (52) having a liquid inlet (54) fluidly communicating with the liquid in said receptacle, pressure responsive means (68, 70) movable with respect to said housing means in response to the liquid pressure in said housing inlet, circuit means (108, 166, 168) defining a plurality of electrical contact surfaces, and wiper means (102) operable to make sliding electrical contact with said contact surfaces and slidably movable with respect thereto in response to movement of said pressure responsive means.

5. An appliance as claimed in claim 4, characterised in that said housing means (52, 58) defines guide means (88), and the plunger means (92) contacts said guide means and is directed thereby, said circuit means defining a plurality of electrical contact surfaces (108, 168, 166) aligned in the direction of motion of said plunger means.

6. An appliance as claimed in claim 5, characterised in that the wiper means (102) is operatively connected to said pressure responsive means for movement therewith.

7. An appliance as claimed in claim 2, characterised in that the sensor means (50) includes housing means (58, 52) defining a fluid inlet (300) communicating with said liquid in said receptacle, said housing means further defining guide means. pressure responsive means (294, 292) movable with respect to said housing means in response to the fluid pressure in said fluid inlet, wiper means (282) including electrical contact means stationary with respect to said housing means, and circuit board means (288) including at least one electrical contact member on the surface thereof, said circuit board means being operatively connected to said pressure responsive means for movement therewith and having said surface contact member slidably contacting member slidably contacting said stationary electrical contact means, wherein said movement of said circuit board means is directed by said guide means.

8. An appliance as claimed in claim 2, characterised in that the logic means is operative in response to predetermined values of said certain characteristics of said sensor signal to actuate and deactuate said scrubbing means.

9. An appliance as claimed in claim 2, characterised by circuit means operative to provide a reference signal (12, 116, 122, 125), said logic means (120) being operative to compare said characteristic of said varying signal with said reference signal and activate said fill valve at predetermined values of said comparison.

10. An appliance as claimed in claim 9, further characterised by means (227) operative upon actuation to dispense an additive to said liquid in said receptacle, said logic means including means (223) operative in response to predetermined values of said comparison to actuate said dispensing means.

11. An appliance for washing articles in a receptacle holding liquid into which the articles to be washed are immersed and performing a preselected program of washing operations on said articles, said appliance comprising filling means operable upon connection to a source of washing liquid and upon selective actuation to introduce liquid into said receptacle, drain means operable upon selective actuation to effect discharge of said liquid from said receptacle, sensor means operable to sense the hydrostatic pressure head of said liquid in said receptacle, and agitation means operable upon selective actuation to effect a scrubbing action of said articles with respect to the washing liquid in said receptacle, and characterised in that the sensor means comprises housing means (52, 58) having an inlet (54) fluidly communicating with the liquid in said receptacle, pressure responsive means (68, 70) movable with respect to said housing means in response to changes in the liquid pressure in said housing inlet, circuit means (102, 108) operative upon connection to a source of electrical power to provide said sensor signal in response to movement of said pressure responsive means, said circuit means including a plurality of electrical contact members with one of said members stationary with respect to said housing means and another of said members in sliding contact therewith and slidably movable with respect to said stationary contact in response to movement of said pressure responsive means, and further characterised by logic means (116, 122, 120, 125) operative in response to said certain characteristics of said sensor signal to actuate said filling means and said drain means to effect a preselected program of washing operations in a preselected amount of liquid.

12. An appliance as claimed in claim 11, characterised in that the circuit means includes a printed circuit board (108) stationary with respect to said housing means with one of said electrical contacts thereon.

13. An appliance as claimed in claim 11, characterised in that the circuit means includes a printed circuit board (288) having one of said electrical contacts provided thereon, said printed circuit board being movable with respect to said housing means in response to movement of said pressure responsive means.

14. An appliance as claimed in any of claims 11 to 13, characterised in that the sensor means (50) includes anti-flood circuit means (217) operable to deactuate said filling means upon said pressure head in said receptacle reaching a predetermined value, said anti-flood circuit means by-passing said logic means to provide overfill protection in the event of failure of said logic means.

15. An appliance as claimed in any of claims 11 to 14, further characterised by display means (112) operative to display a readout for the appliance operator and wherein said logic means includes means (122) operable to digitally encode the value of said certain signal characteristics and to supply said code to said display means readout of said liquid level in said receptacle.

16. An appliance as claimed in any of claims 11 to 15, characterised in that the housing inlet includes a restrictor (56) to dampen inlet pressure pulses.

17. An appliance as claimed in any of claims 11 to 16, characterised in that said certain characteristics of said varying signal comprise a plurality of logic 0 to 1 and logic 1 to 0 changes at preselected increments of liquid level in said receptacle, and, said appliance further comprising means (116,118) responsive to said logic changes and operative to give a digital number for each increment of liquid level, and, means (157, 161) receiving each digital number and operative to produce a different and distinct transfer signal for each number, and, means (139, 146, 145, 141) operative to provide an indication of the presence of each transfer signal.

18. An appliance as claimed in claim 17, characterised in that said presence indicating means comprises light emitting diodes.

19. An appliance as claimed in any of claims 11 to 18, characterised in that the logic means is operative in response to predetermined values of said sensor signal to actuate said agitation means.

Fig.1

Fig.3

Fig.5

Fig.2

Fig. 5

_Fig. 7_

_Fig. 8_

Fig.9

Fig.10

Fig.13

$\equiv \llcorner \bar{\underline{\mathbf{J}}}. \mathbf{11}$

$\equiv \llcorner \bar{\underline{\mathbf{J}}}. \mathbf{12}$

0017453

# European Patent Office

**EUROPEAN SEARCH REPORT**

Application number

EP 80 30 0993

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| | <u>FR - A - 1 597 908</u> (LANDIS & GYR)<br><br>* Page 1, lines 1-7; claims *<br>-- | 1,4-7<br>12,13, | D 06 F 33/02<br>G 01 F 23/18<br>H 03 K 13/18<br>G 01 L 9/00//<br>H 01 H 35/14 |
| | <u>GB - A - 810 333</u> (BENDIX AVIATION)<br><br>* Page 2, lines 37-41; claims; page 5, lines 22-50 *<br>-- | 1,2,<br>13,15,<br>17,18 | |
| | <u>US - A - 3 225 595</u> (DOTTO)<br><br>* Column 1, lines 9-54; column 2, lines 3-45; claim 1; figures *<br>-- | 1,2,<br>15 | TECHNICAL FIELDS SEARCHED (Int.Cl. 3) |
| | <u>FR - A - 2 351 399</u> (LUCAS ELECTRICAL)<br><br>* Claims 1,12; figures *<br>-- | 1,2,4,<br>5,13,<br>15 | D 06 F<br>G 01 F<br>G 01 L<br>H 01 H<br>G 01 D<br>G 05 D<br>H 03 K |
| | <u>FR - A - 2 377 614</u> (CROUZET)<br><br>* Page 2, lines 21-28; claims *<br>-- | 1-3,8-<br>11 | |
| P | <u>DE - A - 2 812 231</u> (KIENINGER & OBERGFELL)<br><br>* Page 14, last paragraph; page 15, first paragraph; page 17, last paragraph; page 18; page 26, last paragraph; pages 27, 28,29,32 *<br>-- | 1-14,<br>16-19 | |
| A | <u>US - A - 3 986 040</u> (KARKLYS)<br><br>* Column 3, lines 35-68; column 4, lines 1-41 *<br>-- | 1 | CATEGORY OF CITED DOCUMENTS<br><br>X: particularly relevant<br>A: technological background<br>O: non-written disclosure<br>P: intermediate document<br>T: theory or principle underlying the invention<br>E: conflicting application<br>D: document cited in the application<br>L: citation for other reasons |
| A | <u>US - A - 3 986 372</u> (KARKLYS)<br><br>* Abstract; claim 1 *    ./.. | 1,14 | &: member of the same patent family, corresponding document |

X The present search report has been drawn up for all claims

| Place of search | Date of completion of the search | Examiner |
|---|---|---|
| The Hague | 11.07.1980 | D'HULSTER |

EPO Form 1503.1   06.78

European Patent Office

**EUROPEAN SEARCH REPORT**

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| A | <u>DE - B - 1 148 519</u> (LICNETIA)<br><br>* Claim *<br><br>-- | 16 | |
| A | <u>FR - A - 2 150 411</u> (DRESSER)<br><br>* Pages 1,2, and 3; figures *<br><br>-- | 1 | |
| A | <u>FR - A - 2 158 967</u> (PHILIPS)<br><br>* Pages 1,2; page 3, lines 1-9; figures; page 13, lines 27-40 *<br><br>---- | 15,18 | TECHNICAL FIELDS SEARCHED (Int. Cl. 3) |

EPO Form 1503.2  06.78